# EUROPÄISCHE PATENTSCHRIFT

(11) **EP 1 597 518 B1**
(45) Veröffentlichungstag und Bekanntmachung des Hinweises auf die Patenterteilung: **15.07.2009**
(21) Anmeldenummer: 04714331.8
(22) Anmeldetag: 25.02.2004
(51) Int. Cl.: F23N 5/00, F02C 9/28

(54) **BETRIEBSVERFAHREN FÜR EINE GASTURBINE**
OPERATING METHOD FOR A GAS TURBINE
MODE DE FONCTIONNEMENT D'UNE TURBINE A GAZ

(30) Priorität: 27.02.2003 DE 10308384
(43) Veröffentlichungstag der Anmeldung: 23.11.2005
(73) Patentinhaber: Alstom Technology Ltd, 5400 Baden (CH)
(72) Erfinder: HELLAT, Jaan, CH-5406 Baden (CH); RICCIUS, Oliver, CH-5413 Birmenstorf (CH); SMITH, Richard, CH-5408 Ennetbaden (CH); VIERECK, Detlef, 79787 Lauchringen (DE)
(86) Internationale Anmeldenummer: PCT/EP2004/050204
(87) Internationale Veröffentlichungsnummer: WO 2004/076925

(56) Entgegenhaltungen:
- WO-A-03/062618
- DE-A- 10 302 487
- DE-A- 19 838 361

## Beschreibung

### Technisches Gebiet

Die vorliegende Erfindung betrifft ein Verfahren zum Betreiben einer Gasturbine, insbesondere in einer Kraftwerksanlage.

### Stand der Technik

Gasturbinen werden üblicherweise mit Erdgas als Brennstoff betrieben. Erdgas besteht im wesentlichen aus CH₄ (Methan). Des weiteren enthält Erdgas auch sogenannte nicht-CH₄-Komponenten, die Verdünnungsstoffe oder Anreicherungsstoffe sein können. Verdünnungsstoffe sind beispielsweise N₂ (Stickstoff) und CO₂ (Kohlendioxid). Anreicherungsstoffe sind üblicherweise höher gesättigte Kohlenwasserstoffe, wie z. B. C₂H₆ (Ethan), C₃H₈ (Propan), Butan usw.

Derzeit ist es üblich, die Qualität, also die Zusammensetzung von Erdgas mit Hilfe von zwei Kennzahlen zu charakterisieren, zum einen ist dies der Heizwert und zum anderen die Wobbe-Zahl. Bislang ist es außerdem üblich, eine Gasturbine mit Erdgas konstanter Qualität zu betreiben.

Die Gasversorgungsbetriebe können derzeit noch eine konstante Qualität für das gelieferte Erdgas gewährleisten. Im Zuge der Liberalisierung des Erdgasmarktes versuchen jedoch die Erdgasversorgungsbetriebe vermehrt, Erdgasnachfrage und Erdgaspreis zu optimieren, was dazu führt, dass Erdgase aus verschiedenen Quellen beschafft, vermischt und den Verbrauchern zugeführt werden. Hierdurch ergibt sich eine große Variabilität des gelieferten Erdgases hinsichtlich Qualität bzw. Zusammensetzung. Die Zusammensetzung des Erdgases kann sich jedoch auf den Verbrennungsprozeß in einer Gasturbine auswirken, wobei die bislang bekannten Kennzahlen (Heizwert und Wobbe-Zahl) ungeeignet sind, diese Auswirkungen auf den Gasturbinenbetrieb hinreichend genau zu beschreiben. Es besteht daher bei den Kraftwerksbetreibern das Bedürfnis, zukünftig auf variierende Erdgasqualitäten vorbereitet zu sein.

Mit den Auswirkungen unterschiedlicher Gaszusammensetzungen verschiedener Gasversorgungsuntemehmen für den Betrieb von Heizgeräten beschäftigt sich DE 19838361.
Zu dem Zwecke einer Anpassung der Heizgeräte an die jeweilige angebotene Gaszusammensetzung wird gemäss dieser Druckschrift angeregt, die jeweilige Zusammensetzung des dem Brenner zugeführten Gases zu analysieren und in Abhängigkeit von der Gaszusammensetzung Brennstoffmassenstrom zu steuern. Hierfür ist in der Gaszufuhrleitung ein Gassensor angeordnet, welcher vorzugsweise die Anteile an CH₄, CₓH_{y} und H₂ ermittelt. Ausgangsseitig ist der Sensor auf eine Steuereinrichtung für ein Stellglied in der Zufuhrleitung geschaltet.
Auf diese Weise soll dem Heizgerät stets ein Gasstrom konstanter Wobbe-Zahl zugeführt werden und damit ein optimaler Betrieb gewährleistet werden.
Für den Betrieb einer modernen Gasturbine mit Erdgas schwankender Qualität ist eine solche Steuerung jedoch nicht ausreichend, da die höher gesättigten Kohlenwasserstoffe teilweise erhebliche Effekte auf den Verbrennungsvorgang haben, die in der Wobbe-Zahl nur einen ungenügenden Niederschlag finden.

Ein Verfahren zum Betrieb einer Gasturbine, das auf unterschiedliche Brenngasqualitäten nahezu verzögerungsfrei zu reagieren vermag, offenbart die nachveröffentlichte WO 03/062618. Das dort vorgestellte Betriebsverfahren für eine Gasturbine zeichnet sich dadurch aus, dass eine massgebliche Brenngaseigenschaft ermittelt und diese in das Regelsystem der Gasturbine eingebunden wird, um nach Massgabe dieser Brenngaseigenschaft Regeleingriffe auf den Betrieb der Gasturbine erfolgen zu lassen, dergestalt, dass als massgebliche Brenngaseigenschaft auf den Gehalt des Brenngases an C₂₊-Alkanen abgestellt wird. C₂+ ist dabei eine abgekürzte Schreibweise für alle höher gesättigten Kohlenwasserstoffe, also alle Kohlenwasserstoffe mit Ausnahme von CH₄.
Die aktuelle Zusammensetzung des der Gasturbine zugeführten Erdgases wird während des Betriebs der Gasturbine mittels einer Infrarotmesstechnik gemessen und das Betriebskonzept der Gasturbine an die aktuell gemessene Erdgas-Zusammensetzung angepasst.
Eine zunehmende Konzentration von C₂+ im Erdgas führt im Verbrennungsprozeß der mit diesem Erdgas versorgten Gasturbine zu einer Abnahme der Zündverzögerungszeit sowie zu einer Abnahme der Selbstentzündungstemperatur. Des weiteren wirkt sich die Konzentration von C₂+ auf die obere und untere Mischgrenze für zündfähige Erdgas-Luft-Mischungen aus. Außerdem kann sich die Konzentration von C₂+ auf den chemischen Reaktionspfad auswirken, was seinerseits den Ausbrenngrad und die Emissionswerte der Verbrennungsreaktion verändert. Des weiteren kann eine Veränderung der Konzentration von C₂+ eine Änderung der Wobbe-Zahl und/oder des Heizwerts bewirken, wodurch der Eindüsimpuls und die Mischeigenschaften des Erdgases mit der Verbrennungsluft beeinflußt werden können. Beispielsweise ergibt sich dadurch in einem typischen Vormisch-Verbrennungssystem eine Abhängigkeit der Position einer Reaktionszone von der Erdgasqualität. Das bedeutet, mit zunehmender Konzentration von C₂+ nähert sich die Flammenfront in der Brennkammer an den Brenner an. Eine zunehmende Konzentration von C₂+ führt daher zu einer erhöhten Gefahr eines Flammenrückschlags sowie einer Überhitzung des Brenners, was seinerseits zu höheren Schadstoffemissionen, insbesondere NOₓ-Emissionen, führen kann.

### Darstellung der Erfindung

Der Erfindung liegt die Aufgabe zugrunde, für ein Verfahren zum Betrieb einer Gasturbine, welches auf der Messung des Gehalts an C₂₊-Alkanen als massgebliche Brenngaseigenschaft basiert, eine weiterentwickelte Alternative bereitzustellen, die es erlaubt, die Auswirkungen des Gehalts an C₂₊ im Erdgas auf den Gasturbinenprozess besser differenzieren zu können.

Erfindungsgemäß wird die Aufgabe durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die aktuelle Zusammensetzung des der Gasturbine zugeführten Erdgases während des Betriebs der Gasturbine, also quasi on-line zu messen und das Betriebskonzept der Gasturbine an die aktuell gemessene Erdgas-Zusammensetzung anzupassen, dergestalt, während des Betriebs der Gasturbine zusätzlich eine im Erdgas vorliegende Konzentration von C₃+ zu messen und die Gasturbine in Abhängigkeit der aktuell gemessenen Konzentrationen von C₂+ und C₃+ zu betreiben.
Entsprechend zur Definition von C₂+ steht die Abkürzung C₃+ für alle Kohlenwasserstoffe, abgesehen von CH₄ und C₂H₆. Durch die zusätzliche Messung der Konzentration von C₃+ kann der Einfluß von C₂H₆ auf den Gasturbinenbetrieb isoliert betrachtet werden. Derartige Zusammenhänge können bei dem vorgeschlagenen Verfahren vorteilhaft berücksichtigt werden.

Weitere wichtige Merkmale und Vorteile der vorliegenden Erfindung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert. Es zeigen, jeweils schematisch,
- Fig. 1: eine schaltplanartige Prinzipdarstellung einer Gasturbinenanlage,
- Fig. 2 bis 4: verschiedene Kennfelder für Betriebsparameter einer Gasturbine.

### Wege zur Ausführung der Erfindung

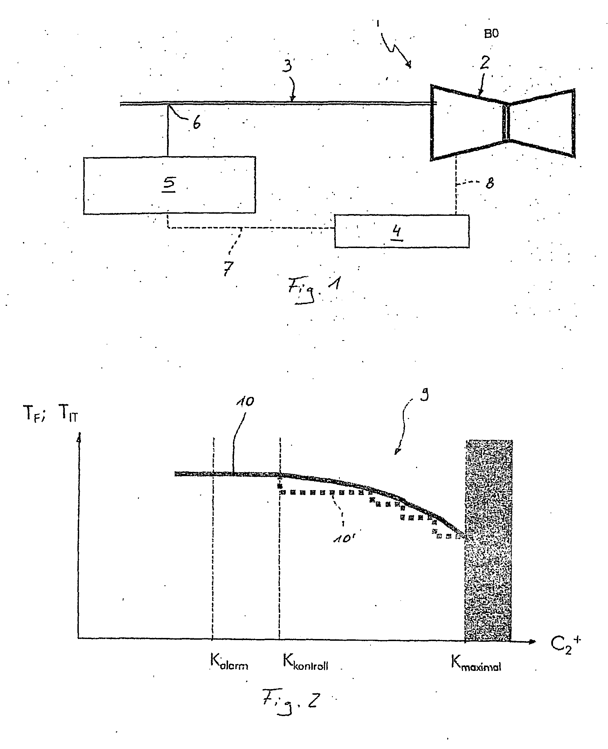

Entsprechend Fig. 1 umfaßt eine Gasturbinenanlage 1, insbesondere in einer Kraftwerksanlage, zumindest eine Gasturbine 2, die über eine Erdgasversorgungsleitung 3 mit Erdgas versorgt wird. Zum Betreiben der Gasturbine 2 ist eine Steuerungs- und/oder Regelungseinrichtung 4 vorgesehen, in der eine geeignete Steuerungs- und/oder Regelungsprozedur abgearbeitet wird. Die Steuerungs- und/oder Regelungseinrichtung 4 bzw. die darin ablaufende Prozedur kontrolliert Betriebsparameter der Gasturbine 2, wie z. B. eine Flammentemperatur des in einer Brennkammer der Gasturbine 2 ablaufenden Verbrennungsprozesses. Des weiteren können eine Turbineneinlaßtemperatur sowie weitere Temperaturen kontrolliert werden. Darüber hinaus kann auch eine Kontrolle der Schadstoffemissionen, insbesondere der NOₓ-Emissionen, vorgesehen sein. Ebenso ist es möglich, dass in der Brennkammer eine Position einer Flammenfront überwacht wird. Die Steuerungs- und/oder Regelungseinrichtung 4 bzw. deren Prozedur dient in üblicher Weise dazu, die Gasturbine 2 möglichst konstant in einem vorbestimmten Nennbetriebspunkt zu betreiben, wobei zusätzlich Anpassungen an sich ändernde Lastbedingungen (z.B. Spitzenlasten) durchgeführt werden können.

Die Gasturbinenanlage 1 ist mit einer Meßeinrichtung 5 ausgestattet, mit deren Hilfe eine Konzentration von C₂+ in dem Erdgas gemessen werden kann, das der Gasturbine 2 aktuell zugeführt wird. Zu diesem Zweck ist die Meßeinrichtung 5 bei 6 an die Erdgasversorgungsleitung 3 angeschlossen. Die Meßergebnisse, also die Konzentration von C₂+, werden dann über eine entsprechende Signal- oder Datenübertragungsleitung 7 der Steuerungs- und/oder Regelungseinrichtung 4 übermittelt und von dieser bzw. von deren Prozedur verarbeitet.

Bei der Messung der Konzentration von C₂+ wird somit der Gesamtanteil aller höher gesättigten Kohlenwasserstoffe gemessen und zu einer Integralkonzentration zusammengefaßt. Um die Auswirkungen der C₂H₆-Konzentration im Erdgas differenziert berücksichtigen zu können, wird die integrale Konzentration von C₃+ zusätzlich zur Konzentration von C₂+ ermittelt.

Die Steuerungs- und/oder Regelungseinrichtung 4 betreibt die Gasturbine 2 in Abhängigkeit der Konzentrationen von C₂+ und C₃+. Diese Art der Differenzierung kann grundsätzlich noch weiter verfeinert werden, beispielsweise mit einer zusätzlichen Messung der Konzentration von C₄+, was eine isolierte Betrachtung und Berücksichtigung des Einflusses von C₄H₈ ermöglicht.

Wichtig ist hierbei, dass die jeweilige Konzentration von C₂+ bzw. C₃+; während des Betriebs der Gasturbine 2, also quasi on-line, ermittelt wird, um den Betrieb der Gasturbine 2 möglichst zeitnah an sich ändernde Konzentrationen von C₂+ bzw. C₃+ anpassen zu können.

Die Anpassung des Betriebs der Gasturbine 2 an die aktuelle Konzentration von C₂+ und C₃+ erfolgt zweckmäßig dadurch, dass zumindest ein Betriebsparameter der Gasturbine 2 in Abhängigkeit der aktuell gemessenen Konzentration von C₂+ bzw. C₃+ variiert wird. Betriebsparameter, die sich für eine Anpassung des Gasturbinenbetriebs an die aktuelle Konzentration von C₂+ bzw. C₃+ in besonderer Weise eignen, sind z. B. eine Flammentemperatur T_{F} sowie eine Turbineneinlaßtemperatur T_{IT}. Bevorzugt wird daher eine Ausführungsform, bei welcher die Steuerungs- und/oder Regelungseinrichtung 4 bzw. deren Prozedur mit zunehmender Konzentration von C₂+ und C₃+ die Flammentemperatur T_{F} und/oder die Turbineneinlaßtemperatur T_{IT} reduzieren. Wie bereits weiter oben erläutert, führt eine zunehmende Konzentration von C₂+ und/oder C₃+ zu einer Verkürzung der Zündverzögerungszeit sowie zu einer Reduzierung der Selbstentzündungstemperatur des Erdgases. Die Reduzierung der Flammentemperatur T_{F} bzw. der Turbineneinlaßtemperatur T_{IT} wirkt dem entgegen und führt zu einem gewissen Ausgleich.

Von besonderem Interesse ist eine Ausführungsform, bei welcher die Reduzierung der Flammentemperatur T_{F} und/oder der Turbineneinlaßtemperatur T_{IT} so durchgeführt wird bzw. werden, dass eine von der Regelungs- und/oder Steuerungseinrichtung 4 überwachte geeignete Referenztemperatur im wesentlichen konstant bleibt. Zur Messung einer solchen Referenztemperatur eignet sich in besonderer Weise eine Stelle, die der Gefahr eines Flammenrückschlags ausgesetzt ist. Beispielsweise kann die Referenztemperatur an oder in einem Brenner und/oder an einer Lanze zum Eindüsen des Erdgases gemessen werden.

Die Anpassung der Flammentemperatur. T bzw. der Turbineneinlaßtemperatur T_{IT} an die aktuelle Konzentration von C₂+ bzw. C₃ kann zusätzlich oder alternativ so durchgeführt werden, dass ein Schadstoffemissionswert, vorzugsweise für NOₓ-Emissionen, im wesentlichen konstant bleibt. Zusätzlich oder alternativ kann das Nachstellen der Flammentemperatur T_{F} bzw. der Turbineneinlaßtemperatur T_{IT} so erfolgen, dass in der Brennkammer die Position der Flammenfront im wesentlichen konstant bleibt.

In Fig. 2 ist ein Kennfeld 9 wiedergegeben, in dem eine Kennlinie 10 abgelegt ist. Diese Kennlinie 10 beschreibt dabei den funktionalen Zusammenhang zwischen der Flammentemperatur T_{F} und/oder der Turbineneinlaßtemperatur T_{IT}, die auf der Ordinate aufgetragen sind, und der Konzentration von C₂+ im Erdgas, die auf der Abszisse aufgetragen ist. Die Flammentemperatur T_{F} bzw. die Turbineneinlaßtemperatur T_{IT} repräsentieren dabei Betriebsparameter der Gasturbine 2, die von der Steuerungs- und/oder Regelungseinrichtung 4 eingestellt und kontrolliert werden. Wie oben erwähnt, ist es für den Gasturbinenbetrieb vorteilhaft, die Flammentemperatur T_{F} bzw. die Turbineneinlaßtemperatur T_{IT} mit zunehmener Konzentration von C₂+ zu senken.

Grundsätzlich kann das Nachstellen der genannten Betriebsparamter T_{F} und/oder T_{IT} kontinuierlich durchgeführt werden. Zweckmäßig ist jedoch eine Ausführungsform, bei welcher eine Anpassung der genannten Betriebsparameter T_{F}, T_{IT} erst oberhalb einer Kontrollkonzentration Kₖₒₙₜᵣₒₗₗ von C₂+ im Erdgas erfolgt. Das heißt, bei Konzentrationen von C₂+, die unterhalb der Kontrollkonzentration Kₖₒₙₜᵣₒₗₗ liegen, bleiben die Flammentemperatur T_{F} bzw. die Turbineneinlaßtemperatur T_{IT} in der Kennlinie 10 konstant. Ab dieser Kontrollkonzentration Kₖₒₙₜᵣₒₗₗ wird dann mit zunehmender Konzentration von C₂+ der jeweilige Betriebsparameter T_{F}, T_{IT} reduziert. Diese Reduzierung kann entsprechend der durchgezogenen Kennlinie 10 kontinuierlich erfolgen. Mit unterbrochenen Linien ist dagegen eine diskontinuierliche bzw. gestufte Variante der Kennlinie 10` wiedergegeben, bei welcher der jeweilige Betriebsparameter T_{F}, T_{IT} in Stufen dem aktuellen Wert der Konzentration von C₂+ folgt.

Die Kennlinie 9 enthält außerdem eine Alarmkonzentration Kₐₗₐᵣₘ, die kleiner ist als die Kontrollkonzentration Kₖₒₙₜᵣₒₗₗ. Sobald die aktuell gemessene Konzentration von C₂+ diese Alarmkonzentration Kₐₗₐᵣₘ übersteigt, gibt die Steuerungs- und/oder Regelungseinrichtung 4 ein entsprechendes Warnsignal ab, das auf geeignete Weise weiterverarbeitet werden kann. Diese Alarmkonzentration Kₐₗₐᵣₘ kann dabei so gewählt werden, dass sie Ungenauigkeiten und Verzögerungszeiten bei der Messung der Konzentration von C₂+ berücksichtigt.

Desweiteren ist im Kennfeld 9 eine Maximalkonzentration Kₘₐₓᵢₘₐₗ eingetragen, die größer ist als die Kontrollkonzentration Kₖₒₙₜᵣₒₗₗ. Sobald die Konzentration von C₂+ die Maximalkonzentration Kₘₐₓᵢₘₐₗ erreicht oder übersteigt, erzeugt die Steuerungs- und/oder Regelungseinrichtung 4 ein Notsignal, das auf geeignete Weise weiterverarbeitet werden kann. Beispielsweise kann im Extremfall die Gasturbine 2 abgeschaltet werden.

Die genannten Konzentrationen Kₖₒₙₜᵣₒₗₗ, Kₐₗₐᵣₘ, Kₘₐₓᵢₘₐₗ sind vorgegeben und können beispielsweise empirisch oder mittels Berechnungsmodellen ermittelt werden.

Die Kontrollkonzentration Kₖₒₙₜᵣₒₗₗ kann beispielsweise einen Wert von 9 bis 12
Vol % C₂+ im Erdgas betragen. Die Alarmkonzentration Kₐₗₐᵣₘ kann beispielsweise einen Wert zwischen 7 und 12 Vol % C₂+ im Erdgas betragen. Für die Maximalkonzentration Kₘₐₓᵢₘₐₗ kann ein Wert von wenigstens 16 Vol % C₂+ im Erdgas vorgegeben sein.

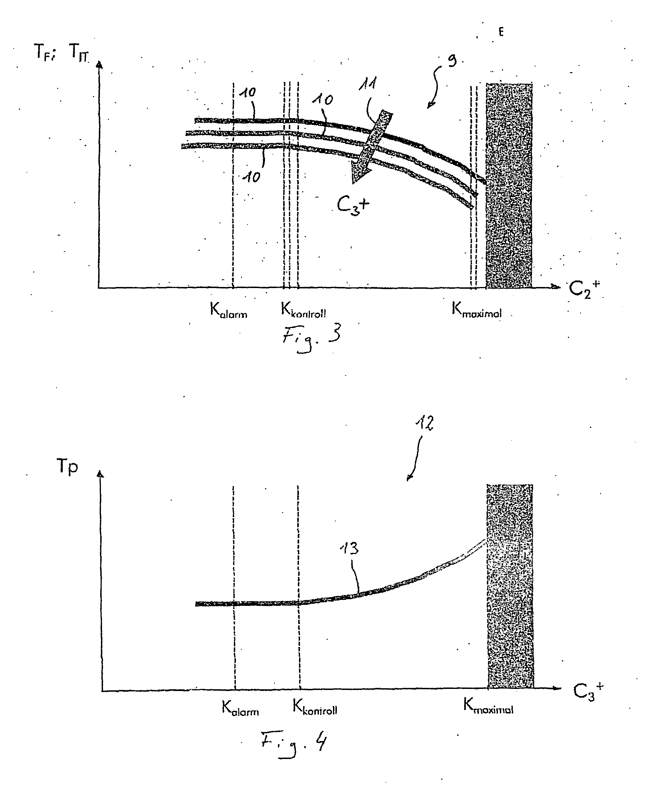

Zur Ermittlung und Auswertung der Konzentration von C₃₊ zusätzlich zur Konzentration von C₂₊ kann es zweckmäßig sein, entsprechend Fig. 3 im Kennfeld 9 mehrere Kennlinien 10 für die Abhängigkeit zwischen dem jeweiligen Betriebsparameter (z.B. Flammentemperatur T_{F} und/oder Turbineneinlaßtemperatur T_{IT}) und der Konzentration von C₂+ abzulegen. Dabei sind diese Kennlinien 10 jeweils unterschiedlichen Konzentrationen von C₃+ zugeordnet, was in Fig. 3 durch einen Pfeil 11 repräsentiert ist. In der Richtung des Pfeils 11 nimmt die Konzentration von C₃+ zu. Für die Steuerungs- und/oder Regelungseinrichtung 4 bedeutet dies, dass in Abhängigkeit der aktuellen Konzentration von C₃+ zunächst die richtige Kennlinie 10 ausgewählt wird und anschließend aus der ausgewählten Kennlinie 10 in Abhängigkeit der aktuellen Konzentration von C₂+ der richtige Betriebsparameter, z. B. T_{F} und/oder T_{IT}, bestimmt wird. Den unterschiedlichen Kennlinien 10 sind im Kennfeld 9 gemäß Fig. 3 entsprechend unterschiedliche Kontrollkonzentrationen Kₖₒₙₜᵣₒₗₗ sowie unterschiedliche Maximalkonzentrationen Kₘₐₓᵢₘₐₗ zugeordnet, während die Alarmkonzentration Kₐₗₐᵣₘ bei allen Kennlinien 10 gleich groß vorgegeben ist.

Während in den vorhergehenden Beispielen jeweils die Flammentemperatur T_{F} und die Turbineneinlaßtemperatur T_{IT} als Beispiele für Betriebsparameter genannt worden sind, die alternativ oder kumulativ in Abhängigkeit der aktuellen Konzentration von C₂+ bzw. C₃+ adaptiert werden können, ist klar, dass die vorliegende Erfindung nicht auf die Beeinflussung dieser Betriebsparameter beschränkt ist. Beispielhaft wird daher mit Bezug auf Fig. 4 noch ein weiterer Betriebsparameter genannt, der in Abhängigkeit der aktuellen Konzentration von C₂+ und C₃+ variiert werden kann.

Es hat sich gezeigt, dass sich die Konzentration von C₂+ und noch stärker die Konzentration von C₃+ auf den Taupunkt des Erdgases auswirkt, wobei eine zunehmende Konzentration höher gesättigter Kohlenwasserstoffe zu einem Ansteigen der Taupunkt-Temperatur führt. Um eine Kondensatbildung im Brennstoffverteilungssystem der Gasturbine 2 zu vermeiden, ist es daher zweckmäßig, eine Vorheiztemperatur Top des Erdgases an die aktuelle Konzentration von C₂+ bzw. von C₃+ anzupassen.

Dementsprechend ist gemäß Fig.4 in einem weiteren Kennfeld 12 eine Kennlinie 13 eingetragen, die den Zusammenhang zwischen der Vorwärmtemperatur T_{P} (Ordinate) und hier der Konzentration von C₃+ (Abszisse) wiedergibt. Dementsprechend bewirkt die Steuerungs- und/oder Regelungseinrichtung 4 bei zunehmender Konzentration von C₃+ ab der Kontrollkonzentration Kₖₒₙₜᵣₒₗₗ eine Erhöhung der Vorwärmtemperatur T_{P} des Erdgases. Die Gefahr einer Kondensatbildung aufgrund einer ansteigenden Taupunkt-Temperatur wird dadurch reduziert.

### Bezugszeichenliste

- 1: Gasturbinenanlage
- 2: Gasturbine
- 3: Erdgasversorgungsleitung
- 4: Steuerungs- und/oder Regelungseinrichtung
- 5: Meßeinrichtung
- 6: Messpunkt
- 7: Signal- oder Datenübertragungsleitung
- 8: Steuerleitung
- 9: Kennfeld
- 10: Kennlinie
- 11: Pfeil
- 12: Kennfeld
- 13: Kennlinie
- F_{T}: Flammentemperatur
- T_{IT}: Turbineneinlasstemperatur
- T_{P}: Vorwärmtemperatur
- C₂+: Konzentration von C₂+
- C₃+: Konzentration von C₃+
- Kₐₗₐᵣₘ: Alarmkonzentration
- Kₖₒₙₜᵣₒₗₗ: Kontrollkonzentration
- Kₘₐₓᵢₘₐₗ: Maximalkonzentration

## Patentansprüche

1. Verfahren zum Betreiben einer Gasturbine (2), insbesondere in einer Kraftwerksanlage, wobei der Gasturbine (2) während des Betriebs Erdgas als Brenngas zugeführt wird, eine in dem der Gasturbine (2) zugeführten Erdgas vorliegende Konzentration von C₂+ gemessen wird, und bei dem die Gasturbine (2) in Abhängigkeit der aktuell gemessenen Konzentration von C₂+ betrieben wird, **dadurch gekennzeichnet,**
**dass** während des Betriebs der Gasturbine (2) außerdem eine im Erdgas vorliegende Konzentration von C₃+ gemessen wird, und dass die Gasturbine (2) in Abhängigkeit der aktuell gemessenen Konzentrationen von C₂+ und C₃+ betrieben wird.

2. Verfahren nach Anspruch 1,
**dadurch gekennzeichnet,**
**dass** eine Steuerungs- und/oder Regelungsprozedur zum Betreiben der Gasturbine (2) an die aktuell gemessenen Konzentrationen von C₂+ und C₃+ angepasst wird.

3. Verfahren nach einem der Ansprüche 1 bis 2,
**dadurch gekennzeichnet,**
**dass** wenigstens ein Betriebsparameter (T_{F}, T_{IT}, T_{P}) der Gasturbine (2) an die aktuell gemessenen Konzentrationen von C₂+ und C₃+ angepasst wird.

4. Verfahren nach einem der Ansprüche 1 bis 3,
**dadurch gekennzeichnet,**
**dass** mit zunehmender Konzentration von C₂+ und C₃+ eine Flammentemperatur (T_{F}) und/oder eine Turbineneinlasstemperatur (T_{IT}) reduziert und/oder eine Vorwärmtemperatur (T_{P}) erhöht wird/werden.

5. Verfahren nach Anspruch 4,
**dadurch gekennzeichnet,**
**dass** die Reduzierung der Flammentemperatur (T_{F}) und/oder der Turbineneinlasstemperatur (T_{IT}) so durchgeführt wird/werden,
- **dass** eine Referenztemperatur, die an einer einem Flammenrückschlag ausgesetzten Stelle gemessen wird, konstant bleibt und/oder
- **dass** ein Schadstoffemissionswert, insbesondere für NOₓ-Emissionen, konstant bleibt und/oder
- **dass** in einer Brennkammer der Gasturbine (2) eine Position einer Flammenfront konstant bleibt.

6. Verfahren nach Anspruch 5,
**dadurch gekennzeichnet,**
**dass** die Referenztemperatur an einem Brenner oder an einer Erdgaseindüslanze gemessen wird.

7. Verfahren nach einem der Ansprüche 1 bis 7,
**dadurch gekennzeichnet,**
**dass** die Anpassung des Gasturbinenbetriebs an die aktuell gemessenen Konzentrationen von C₂+ und C₃+ erst oberhalb einer vorgegebenen Kontrollkonzentration (Kₖₒₙₜᵣₒₗₗ) erfolgt.

8. Verfahren nach einem der Ansprüche 1 bis 8,
**dadurch gekennzeichnet,**
**dass** ein Warnsignal erzeugt wird, wenn die aktuell gemessene Konzentration von C₂+ und/oder C₃+ eine vorgegebene Alarmkonzentration (Kₐₗₐᵣₘ) übersteigt.

9. Verfahren nach den Ansprüchen 7 und 8,
**dadurch gekennzeichnet,**
**dass** die Alarmkonzentration (Kₐₗₐᵣₘ) kleiner ist als die Kontrollkonzentration (Kₖₒₙₜᵣₒₗₗ).

10. Verfahren nach einem der Ansprüche 1 bis 9,
**dadurch gekennzeichnet,**
**dass** ein Notsignal erzeugt wird, wenn die aktuell gemessene Konzentration von C₂+ und /oder C₃+ eine vorgegebene Maximalkonzentration (Kₘₐₓᵢₘₐₗ) übersteigt.

11. Verfahren nach einem der Ansprüche 8 bis 10,
**dadurch gekennzeichnet,**
- **dass** die Kontrollkonzentration (Kₖₒₙₜᵣₒₗ) etwa 9 bis 12 Vol % C₂+ im Erdgas beträgt und/oder
- **dass** die Alarmkonzentration (Kₐₗₐᵣₘ) etwa 7 bis 10 Vol % (C₂₊) im Erdgas beträgt und/oder
- **dass** die Maximalkonzentration (maximal) etwa 16 oder mehr Vol % C₂+ im Erdgas beträgt.

12. Verfahren zumindest nach Anspruch 1,
**dadurch gekennzeichnet,**
**dass** ein Kennfeld (9, 12) vorgesehen ist, in dem für wenigstens einen Betriebsparameter (T_{F}, T_{IT}, T_{P}), der in Abhängigkeit der Konzentration von C₂+ und C₃+ verändert wird, eine Kennlinie (10, 13) abgelegt ist, die den jeweiligen Betriebsparameter (T_{F}, T_{IT}, T_{P}) als Funktion der Konzentrationen von C₂+ und C₃+ abbildet.

13. Verfahren nach den Ansprüchen 2 und 12,
**dadurch gekennzeichnet,**
**dass** das Kennfeld (9) für wenigstens einen Betriebsparameter (T_{F}, T_{IT}, T_{P}), der in Abhängigkeit der Konzentration von C₂+ verändert wird, zumindest zwei Kennlinien (10) enthält, die unterschiedlichen Konzentrationen von C₃+ zugeordnet sind.

14. Verfahren nach einem der Ansprüche 1 bis 13,
**dadurch gekennzeichnet,**
**dass** die Konzentrationen von C₂+ und von C₃+ mit einem Gaschromatographen und/oder mit einem Flammenionisationsdetektor und/oder mit einem Infrarot-Spektrometer gemessen werden.

## Claims

1. Method for operation of a gas turbine (2), in particular in a power station, with the gas turbine (2) being supplied with natural gas as fuel gas during operation, with a concentration of C₂+ being measured which is present in the natural gas supplied to the gas turbine (2), and in which the gas turbine (2) is operated as a function of the currently measured concentration of C₂+, **characterized**
**in that** a concentration of C₃+ which is present in the natural gas also being measured during operation of the gas turbine (2), and in that the gas turbine (2) is operated as a function of the currently measured concentrations of C₂+ and C₃+.

2. Method according to Claim 1,
**characterized**
**in that** an open-loop and/or closed-loop control procedure for operation of the gas turbine (2) is matched to the currently measured concentrations of C₂+ and C₃+.

3. Method according to one of Claims 1 or 2,
**characterized**
**in that** at least one operating parameter (T_{F}, T_{IT}, T_{P}) of the gas turbine (2) is matched to the currently measured concentrations of C₂+ and C₃+.

4. Method according to one of Claims 1 to 3,
**characterized**
**in that**, as the concentration of C₂+ and C₃+ increases, a flame temperature (T_{F}) and/or a turbine inlet temperature (T_{IT}) are/is reduced and/or a preheating temperature (T_{P}) is increased.

5. Method according to Claim 4,
**characterized**
**in that** the reduction in the flame temperature (T_{F}) and/or the turbine inlet temperature (T_{IT}) is carried out in such a way
- that a reference temperature, which is measured at a point that is subject to a flame flashback, remains constant and/or
- that a hazardous emission value, in particular for NOₓ emissions, remains constant, and/or
- that a position of a flame front in a combustion chamber of the gas turbine (2) remains constant.

6. Method according to Claim 5, **characterized in that** the reference temperature is measured at a burner or at a natural gas injection lance.

7. Method according to one of Claims 1 to 7,
**characterized**
**in that** the matching of the gas turbine operation to the currently measured concentrations of C₂+ and C₃+ is carried out only above a predetermined monitoring concentration (Kₘₒₙᵢₜₒᵣ).

8. Method according to one of Claims 1 to 8,
**characterized**
**in that** a warning signal is produced when the currently measured concentration of C₂+ and/or C₃+ exceeds a predetermined alarm concentration (Kₐₗₐᵣₘ)

9. Method according to Claims 7 and 8,
**characterized**
**in that** the alarm concentration (Kₐₗₐᵣₘ) is lower than the monitoring concentration (Kₘₒₙᵢₜₒᵣ).

10. Method according to one of Claims 1 to 9,
**characterized**
**in that** an emergency signal is produced when the currently measured concentration of C₂+ and/or C₃+ exceeds a predetermined maximum concentration (Kₘₐₓᵢₘᵤₘ₎.

11. Method according to one of Claims 8 to 10,
**characterized**
- **in that** the monitoring concentration (Kₘₒₙᵢₜₒᵣ) is about 9 to 12% by volume of C₂+ in the natural gas, and/or
- **in that** the alarm concentration (Kₐₗₐᵣₘ) is about 7 to 10% by volume (C₂+) in the natural gas, and/or
- **in that** the maximum concentration (Kₘₐₓᵢₘᵤₘ) is about 16 or more % by volume of C₂+ in the natural gas.

12. Method at least according to Claim 1,
**characterized**
**in that** a family of characteristics (9, 12) is provided, in which a characteristic line (10, 13) is stored for at least one operating parameter (T_{F}, T_{IT}, T_{P}), which is varied as a function of the concentration of C₂+ and C₃+, which characteristic line (10, 13) maps the respective operating parameter (T_{F}, T_{IT}, T_{P}) as a function of the concentrations of C₂+ and C₃+.

13. Method according to Claims 2 and 12,
**characterized**
**in that** the family of characteristics (9) includes at least two characteristic lines (10), which are associated with different concentrations of C₃+, for at least one operating parameter (T_{F}, T_{IT}, T_{P}) , which is varied as a function of the concentration of C₂+.

14. Method according to one of Claims 1 to 13, **characterized in that** the concentrations of C₂+ and of C₃+ are measured using a gas chromatograph and/or using a flame ionization detector and/or using an infrared spectrometer.

## Revendications

1. Procédé de conduite d'une turbine à gaz (2), en particulier dans une centrale électrique, dans lequel du gaz naturel est apporté comme gaz combustible à la turbine à gaz (2) en fonctionnement et la concentration en C₂₊ du gaz naturel apporté à la turbine à gaz (2) est mesurée, la turbine à gaz (2) étant conduite en fonction de la concentration en C₂₊ effectivement mesurée,
**caractérisé en ce que**
pendant le fonctionnement de la turbine à gaz (2), la concentration en C₃₊ du gaz naturel est en outre mesurée et **en ce que** la turbine à gaz (2) est conduite en fonction des concentrations en C₂₊ et C₃₊ effectivement mesurées.

2. Procédé selon la revendication 1, **caractérisé en ce que** la procédure de commande et/ou de régulation utilisée pour la conduite de la turbine à gaz (2) est adaptée aux concentrations en C₂₊ et C₃₊ effectivement mesurées.

3. Procédé selon l'une des revendications 1 et 2, **caractérisé en ce qu'**au moins un paramètre de conduite (T_{F}, T_{IT}, T_{P}) de la turbine à gaz (2) est adapté aux concentrations en C₂₊ et C₃₊ effectivement mesurées.

4. Procédé selon l'une des revendications 1 à 3, **caractérisé en ce que** lorsque la concentration en C₂₊ et en C₃₊ augmente, la température de flamme (T_{F}) et/ou la température (T_{IT}) d'entrée dans la turbine sont abaissées et/ou la température de préchauffage (T_{P}) est rehaussée.

5. Procédé selon la revendication 4, **caractérisé en ce que** l'abaissement de la température de flamme (T_{F}) et/ou de la température (T_{IT}) d'entrée dans la turbine est réalisé de telle sorte que :
- une température de référence mesurée à un emplacement exposé au retour de flamme reste constante et/ou
- une valeur d'émission de substances nocives, en particulier d'émission de NOₓ, reste constante et/ou
- la position du front de flamme dans la chambre de combustion de la turbine à gaz (2) reste constante.

6. Procédé selon la revendication 5, **caractérisé en ce que** la température de référence est mesurée sur un brûleur ou sur une lance d'injection de gaz naturel.

7. Procédé selon l'une des revendications 1 à 7, **caractérisé en ce que** l'adaptation de la conduite de la turbine à gaz aux concentrations en C₂₊ et C₃₊ effectivement mesurées ne s'effectue qu'au-dessus d'une concentration de contrôle (K_{contrôle}) prédéterminée.

8. Procédé selon l'une des revendications 1 à 8, **caractérisé en ce qu'**un signal d'alarme est formé si les concentrations en C₂₊ et/ou en C₃₊ effectivement mesurées dépassent une concentration d'alarme (Kₐₗₐᵣₘₑ) prédéterminée.

9. Procédé selon les revendications 7 et 8, **caractérisé en ce que** la concentration d'alarme (Kₐₗₐᵣₘₑ) est plus basse que la concentration de contrôle (K_{contrôle}).

10. Procédé selon l'une des revendications 1 à 9, **caractérisé en ce qu'**un signal d'urgence est formé lorsque les concentrations en C₂₊ et/ou en C₃₊ effectivement mesurées dépassent une concentration maximale (Kₘₐₓᵢₘₐₗₑ) prédéterminée.

11. Procédé selon l'une des revendications 8 à 10, **caractérisé en ce que**
- la concentration de contrôle (contrôle) correspond à environ 9 à 12 % en volume de C₂₊ dans le gaz naturel et/ou
- **en ce que** la concentration d'alarme (Kₐₗₐᵣₘₑ) correspond à environ 7 à 10 % en volume de C₂₊ dans le gaz naturel et/ou
- **en ce que** la concentration maximale maximale) correspond à 16 % en volume ou plus de C₂₊ dans le gaz naturel.

12. Procédé selon au moins la revendication 1, **caractérisé en ce qu'**une ligne caractéristique (10, 13) qui représente les différents paramètres de conduite (T_{F}, T_{IT}, T_{P}) en fonction des concentrations en C₂₊ et en C₃₊ est placée dans un champ de caractéristiques (9, 12) pour au moins un paramètre de fonctionnement (T_{F}, T_{IT}, T_{P}) qui est modifié en fonction des concentrations en C₂₊ et en C₃₊.

13. Procédé selon les revendications 2 et 12, **caractérisé en ce que** pour au moins un paramètre de conduite (T_{F}, T_{IT}, T_{P}) qui est modifié en fonction de la concentration en C₂₊, le champ de caractéristiques (9) contient au moins deux lignes caractéristiques (10) auxquelles sont associées différentes concentrations en C₃₊.

14. Procédé selon l'une des revendications 1 à 13, **caractérisé en ce que** les concentrations en C₂₊ et C₃₊ sont mesurées à l'aide d'un chromatographe à gaz et/ou à l'aide d'un détecteur d'ionisation de flamme et/ou à l'aide d'un spectromètre infrarouge.
